# EUROPEAN PATENT APPLICATION

(11) **EP 2 833 311 A1**
(43) Date of publication of application: **04.02.2015**
(21) Application number: 13722273.3
(22) Date of filing: 12.03.2013
(51) Int. Cl.: G06Q 50/00, H02J 13/00

(54) **SOCIAL-INFRASTRUCTURE CONTROL SYSTEM, SERVER, CONTROL METHOD, AND PROGRAM**

(30) Priority: 30.03.2012 JP 2012081082
(71) Applicant: Kabushiki Kaisha Toshiba, Minato-ku Tokyo 105-8001 (JP)
(72) Inventor: MATSUDA, Yoshiyuki, Tokyo 105-8001 (JP); OCHIAI, Makoto, Tokyo 105-8001 (JP); KOBAYASHI, Yoshitaka, Tokyo 105-8001 (JP); SUGIYAMA, Motoo, Tokyo 105-8001 (JP)
(74) Representative: Granleese, Rhian Jane
(86) International application number: PCT/JP2013/056838
(87) International publication number: WO 2013/146233

(57) **Abstract**

According to an embodiment, a social infrastructure control system includes an upper layer control system and a lower layer control system. The lower layer control system includes a sensor, an upload unit and a control unit. The sensor detects event concerning a social infrastructure and outputs event information. The upload unit uploads the event information to the upper layer control system via a telecommunication line. The control unit controls the social infrastructure based on control data transmitted from the upper layer control system or the event information. The upper layer control system includes a data processing unit and a transmission unit. The data processing unit generates the control data used to control the social infrastructure based on the event information. The transmission unit transmits the control data to the control unit via the telecommunication line.

## Description

### Technical Field

Embodiments described herein relate generally to a social infrastructure control system for controlling a social infrastructure.

### Background Art

A society (community) where people live is supported by a wide variety of social infrastructures such as electricity, waterworks, transportation, railways, communications, and buildings. On the other hand, recently growing awareness of ecological problems and urgent energy situations require energy saving in every field of the society. There is much heated debate about how to create a social system capable of saving energy without forcing people to put up with inconveniences in life.

### Summary of Invention

### Technical Problem

In the conventional social system, the social infrastructures are basically managed and operated independently. In, for example, an electricity infrastructure, energy optimization control on a municipality (city, town, or village), region, or household basis is not implemented yet, not to mention energy saving on a country basis.

It is an object to provide a social infrastructure control system, a server, a control method, and a program.

### Solution to Problem

According to an embodiment, a social infrastructure control system includes an upper layer control system and a lower layer control system. The lower layer control system includes a sensor, an upload unit and a control unit. The sensor detects event concerning a social infrastructure and outputs event information. The upload unit uploads the event information to the upper layer control system via a communication network. The control unit controls the social infrastructure based on control data transmitted from the upper layer control system or the event information. The upper layer control system includes a data processing unit and a transmission unit. The data processing unit generates the control data used to control the social infrastructure based on the event information. The transmission unit transmits the control data to the control unit via the communication network.

### Brief Description of Drawings

FIG. 1 is a view showing an example of a system according to an embodiment.
FIG. 2 is a conceptual view showing an example of a social infrastructure control system according to the first embodiment.
FIG. 3 is a functional block diagram showing an example of a social infrastructure control system according to the first embodiment.
FIG. 4 is a schematic view showing the relationship between sensors and social infrastructures.
FIG. 5 is a view showing an example of event information detected by a sensor 50a.
FIG. 6 is a view showing an example of event information 20a stored in a database 20 of a country cloud 100.
FIG. 7 is a view showing an example of optimized event information.
FIG. 8 is a view showing another example of optimized event information.
FIG. 9 is a view schematically showing autonomous control in clouds.
FIG. 10 is a view schematically showing the flow of information and data according to the first embodiment.
FIG. 11 is a conceptual view showing an example of a social infrastructure control system according to the second embodiment.
FIG. 12 is a view schematically showing the gist of the system shown in FIG. 11.
FIG. 13 shows a social infrastructure control system according to the second embodiment.
FIG. 14 is a view showing an example of event information transmitted from a company MS 1 to a vendor MS 1 via a telecommunication line of a communication network NW.
FIG. 15 is a view showing an example of a social infrastructure control system according to the third embodiment.
FIG. 16 is a view showing an example of an algorithm library 90b shown in FIG. 15.
FIG. 17 is a functional block diagram showing an example of a vendor MS 80 shown in FIG. 15.
FIG. 18 is a flowchart showing an example of the processing procedure of a vendor MS 80 according to the third embodiment.

### Description of Embodiments

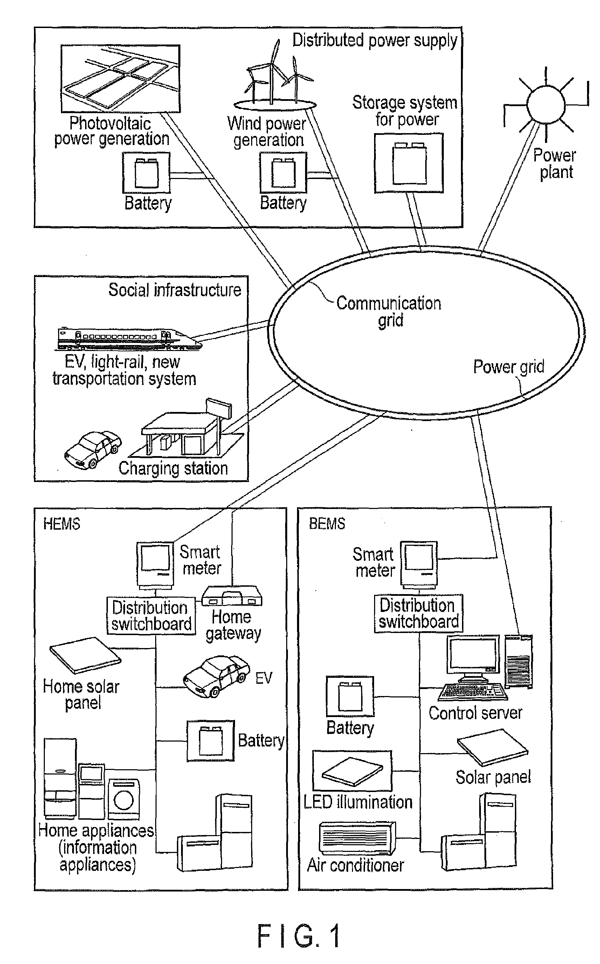

FIG. 1 is a view showing an example of a system according to an embodiment. FIG. 1 illustrates an example of a system known as a so-called smart grid. In an existing grid, existing power plants such as a nuclear power plant, a thermal power plant, and a hydroelectric power plant are connected to various customers such as an ordinary household, a building, and a factory via the grid. In the next-generation power grid, distributed power supplies such as a PV (Photovoltaic Power generation) system and a wind power plant, battery devices, new transportation systems, charging stations, and the like are additionally connected to the power grid. The variety of elements can communicate via a communication grid.

Systems for managing energy are generically called EMS's (Energy Management Systems). The EMS's are classified into several groups in accordance with the scale and the like. There are, for example, an HEMS (Home Energy Management System) for an ordinary household and a BEMS (Building Energy Management System) for a building. There also exist an MEMS (Mansion Energy Management System) for an apartment house, a CEMS (Community Energy Management System) for a community, and a FEMS (Factory Energy Management System) for a factory. Fine energy optimization control is implemented by causing these systems to cooperate.

According to these systems, an advanced cooperative operation can be performed between the existing power plants, the distributed power supplies, the renewable energy sources such as sunlight and wind force, and the customers. This allows to produce a power supply service in a new and smart form, such as an energy supply system mainly using a natural energy or a customer participating-type energy supply/demand system by bidirectional cooperation of customers and companies.

A social system offers comforts and conveniences to the social life via social infrastructures represented by the above-described smart grid. The social system in the future needs to achieve a social target such as energy saving by organically combining the diverse social infrastructures using information processing technologies, communication technologies, and the like. Social infrastructure control systems according to embodiments capable of solving this problem will be described below.

### [First Embodiment]

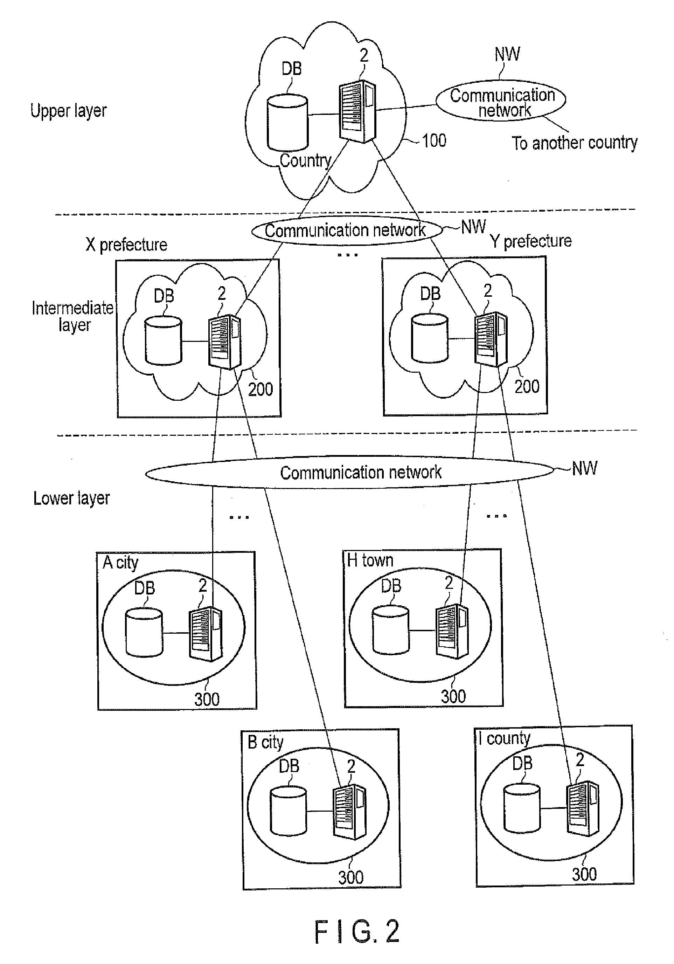

FIG. 2 is a conceptual view showing an example of a social infrastructure control system according to the first embodiment. In embodiments, the social infrastructure control system is formed into a logical hierarchical structure. FIG. 2 illustrates a form including not only an upper layer and a lower layer but also an intermediate layer lower than the upper layer and higher than the lower layer. The number of layers of the hierarchy is not limited to three. An architecture including an intermediate layer having a multilayered structure can also be implemented. Reversely, it is also possible to form a social infrastructure control system comprising only an upper layer and a lower layer. FIG. 2 shows the upper layer, the intermediate layer, and the lower layer in correspondence with hierarchical administrative sections, that is, country, prefectures, and cities/towns/villages, respectively.

In this embodiment, a form in which each layer has been Cloud-ized will be considered. As is known, a cloud computing system comprises a computer 2 and a database DB. The computer 2 can comprise either a single computer or a plurality of computers. The database can be provided in one computer 2 or distributed to a plurality of computers 2.

Referring to FIG. 2, the lower layer comprises a local system formed in a region including social infrastructures. A cloud is formed in each of regions, for example, an A city, a B city, an H town, and an I county. The computer 2 and the database DB are provided in each cloud. The regional clouds are connected via a telecommunication line of a communication network NW and cooperate with each other in the layer.

A cloud computer implemented in the intermediate layer controls the cloud computer implemented in the lower layer as a logical upper layer. For example, the cloud computers of the A city and the B city are controlled by the cloud computer of an X prefecture, and the cloud computers of the H town and the I county are controlled by the cloud computer of a Y prefecture. Each of the X prefecture and the Y prefecture also has been Cloud-ized and comprises the computer 2 and the database DB. The cloud computer of the X prefecture and the cloud computer of the Y prefecture are also connected via a telecommunication line of the communication network NW and cooperate with each other.

The cloud computer of the upper layer controls the computer of the intermediate layer as a logical upper layer. For example, the cloud computers of the X prefecture and the Y prefecture are controlled by the cloud computer of the country. The computer of the country also has been Cloud-ized. Other countries can also exist in the upper layer. The countries can cooperate with each other via a telecommunication line of the communication network NW. A reference numeral 100 is given to the cloud of the upper layer to express it as a country cloud 100. A reference numeral 200 is given to each cloud of the intermediate layer to express it as a prefecture cloud 200. A reference numeral 300 is given to each cloud of the lower layer to express it as a city cloud 300.

All of the country cloud 100, the prefecture cloud 200, and the city cloud 300 can have social infrastructures. For example, consider a form in which a social infrastructure of the city cloud 300 is controlled from the country cloud 100 or the prefecture cloud 200. In this case, the city cloud 300 can be regarded as a local system, and the country cloud 100 or the prefecture cloud 200 can be regarded as an upper layer control system. Consider a form in which a social infrastructure of the prefecture cloud 200 is controlled from the country cloud 100. In this case, the prefecture cloud 200 can be regarded as a local system, and the country cloud 100 can be regarded as an upper layer control system. FIG. 2 shows an example of a form that the local system is formed into a plurality of hierarchical layers.

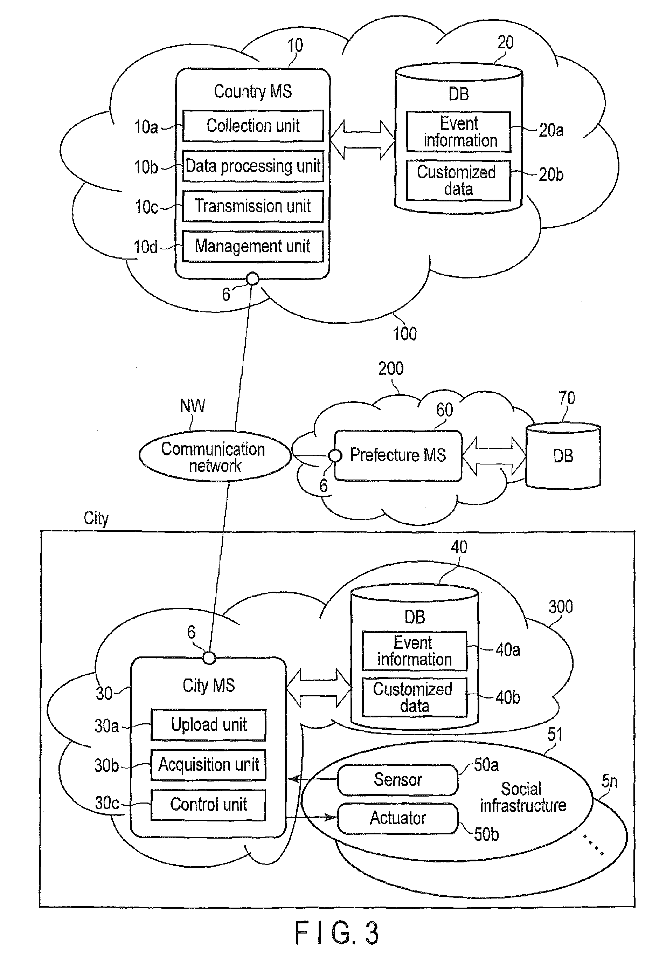

FIG. 3 is a functional block diagram showing an example of a social infrastructure control system according to the first embodiment. A country cloud 100 comprises a country-layer management system 10 and a database 20. A prefecture cloud 200 comprises a prefecture-layer management system 60 and a database 70. A city cloud 300 comprises a city/town/village-layer management system 30, a database 40, and a plurality of social infrastructures 51 to 5n.

For the sake of brevity, the management system will be referred to as MS hereinafter. The country-layer management system 10 will be referred to as the country MS 10. The prefecture-layer management system 60 will be referred to as the prefecture MS 60. The city/town/village-layer management system 30 will be referred to as the city MS 30. The management system MS has the position as a server in embodiment. The management system MS comprises a computer as hardware. The computer can comprise either a single computer or a plurality of computers.

The social infrastructures 51 to 5n include, for example, a water supply network, a cold/heat source plant system, an electricity grid, a traffic network, a medical system, a store network, a building system, a home energy management system, a factory system, a content distribution system, and a railway network. Note that the social infrastructures are not limited to those. For example, a shopping mall or a community and so on includes a plurality of social infrastructures can be regarded as a social infrastructure.

The country cloud 100, the prefecture clouds 200, and the city clouds 300 are connected to each other via the telecommunication lines of the communication network NW. The communication network NW is a guarantee-type network capable of guaranteeing a required communication band (communication capacity). An example of the network of this type is a dedicated line using an optical communication technique. A VPN (Virtual Private Network) formed in an IP (Internet Protocol) network can also be included in the category of the network of this type. The telecommunication line of the communication network NW can also be included in the social infrastructures, as a matter of course.

In the first embodiment, the telecommunication line of the communication network NW can guarantee at least a real time characteristic in event information upload from a lower layer to an upper layer and that in data acquisition from an upper layer to a lower layer.

The event means a short-term or long-term change of state or the state itself of each social infrastructures 51 to 5n. The event information means a signal detected and outputted by a sensor 50a provided in each of the social infrastructures 51 to 5n. Or, the event information means all information created on the basis of the signal.

Each of the social infrastructures 51 to 5n of the city cloud 300 comprises the sensor 50a and an actuator 50b. The sensor 50a detects, for example, event information unique to the social infrastructure. Alternatively, the sensor 50a detects event information related to a plurality of social infrastructures.

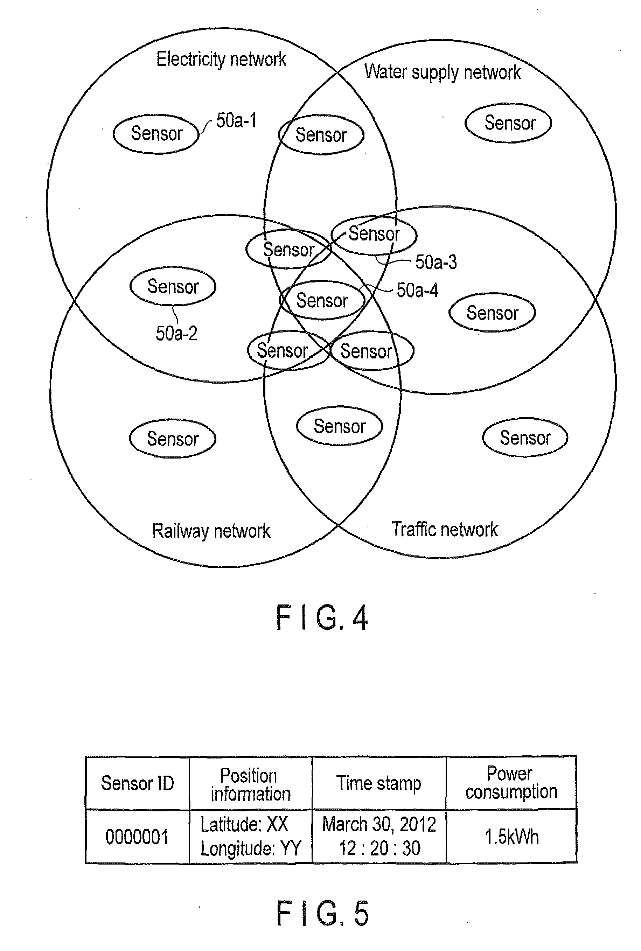

FIG. 4 is a schematic view showing the relationship between sensors and social infrastructures. For example, a sensor 50a-1 detects event information unique to an electricity network. An example of the sensor 50a-1 is a watt-hour meter (smart meter) for measuring power consumption in each home. A sensor 50a-2 detects event associated with the electricity network and a railway network, and can be, for example, a voltmeter of a pantograph. Also considerable are a sensor 50a-3 that acquires event associated with the electricity network, a water supply network, and a traffic network, and a sensor 50a-4 that acquires event associated with all of the electricity network, the water supply network, the traffic network, and the railway network. That is, a sensor 50a can be any means capable of detecting the state of a social infrastructure and expressing it as a numerical value or data. A surveillance camera, a weather radar for acquiring meteorological information, and the like can also belong to this category.

Referring back to FIG. 3, the actuator 50b controls the control target based on a given control signal. The actuator 50b is, for example, a motor that opens/closes a valve provided in the purification system of a water supply infrastructure. The actuator 50b drives the motor based on a control signal that designates the degree of opening of a valve, thereby controlling the degree of opening of the valve and the flow rate of water.

A city MS 30 comprises an upload unit 30a, an acquisition unit 30b, and a control unit 30c as functional objects.

The upload unit 30a uploads event information detected by the sensor 50a to a country MS 10 of a country cloud 100 and a prefecture MS 60 of a prefecture cloud 200 via a telecommunication line of a communication network NW. A public network or a leased line is sufficient as the telecommunication line. A signal line which can transmit the signal concerning event information is sufficient as the telecommunication line.

The acquisition unit 30b acquires control data necessary for control of social infrastructures 51 to 5n from the country MS 10 or the prefecture MS 60.

The control unit 30c gives an actuator 50b a control instruction based on the control data acquired by the acquisition unit 30b, thereby controlling the social infrastructures 51 to 5n. Or, the control unit 30c gives the actuator 50b the control instruction based on the event information detected by the sensor 50a. That is, the control unit 30c controls the social infrastructures 51 to 5n based on the control data acquired from the upper layer or the event information acquired at local.

The control unit 30c gives higher priority to the control based on the control data acquired from the higher layer than the control based on the event information acquired locally. Thus, system-wide optimality is preferentially securable by giving high priority to the control from the upper system.

In case of a failure in communication with the country MS 10 or the prefecture MS 60 caused by, for example, a failure in the line of the communication network NW, the control unit 30c autonomously controls the social infrastructures 51 to 5n based on event information 40a collected by itself.

A database 40 stores the event information 40a and customized data 40b. The event information 40a is information that is outputted from the sensor 50a based on the event detected by the sensor 50a. Necessary information is appropriately selected from pieces of information uploaded to the country MS 10. The customized data 40b is data obtained by processing the event information based on a predefined criterion, for example, data specialized to the control needs of the social infrastructures 51 to 5n. The customized data 40b is acquired from the country MS 10.

The country MS 10 comprises a collection unit 10a, a data processing unit 10b, a transmission unit 10c, and a management unit 10d. For the sake of brevity, it does not illustrate, but the prefecture MS 60 similarly comprises a collection unit 10a, a data processing unit 10b, a transmission unit 10c, and a management unit 10d.

The collection unit 10a collects event information uploaded from the city MS 30. The collected event information is stored in a database 20 as event information 20a. As the event information 20a, event information uploaded from each city cloud 300 (FIG. 2) is intensively stored.

The data processing unit 10b generates data necessary for the city MS 30 to control the social infrastructures 51 to 5n by processing the event information 20a stored in the database 20. In particular, the data processing unit 10b processes the uploaded event information in accordance with the layer levels of the country cloud 100, the prefecture cloud 200, and the city cloud 300 or the individual needs of the clouds, thereby generating customized data 20b optimized on the cloud basis. Optimization includes, for example, extraction of data necessary for each cloud and added value generation such as average calculation. The generated customized data 20b is stored in the database 20.

Optimization is performed using the following method. For example, the data processing unit 10b calculates demand data based on the received event information. Next, the data processing unit 10b executes optimization calculation to optimize a predefined evaluation function (for example, "power"). Linear programming can be used for optimization calculation. A load prediction result (for example, "power demand heat") obtained by this method and the optimization calculation result can be used as the customized data for each cloud.

The transmission unit 10c transmits the data generated by the data processing unit 10b to the city MS 30. The management unit 10d manages the social infrastructures 51 to 5n based on event information uploaded from the city MS 30 for the social infrastructures 51 to 5n.

In the above-described arrangement, the city MS 30, the prefecture MS 60, and the country MS 10 are computers detachably connected to the telecommunication line of the communication network NW via interface units 6. The computers can carry out their functions on a standalone basis. Alternatively, a plurality of computers provided in the cloud computing system may cooperatively implement the functions of the city MS 30, the prefecture MS 60, and the country MS 10. How to implement the upload unit 30a, the acquisition unit 30b, the control unit 30c, the collection unit 10a, the data processing unit 10b, the transmission unit 10c, and the management unit 10d in the system can easily be understood by those skilled in the art.

FIG. 5 is a view showing an example of event information outputted from the sensor 50a based on the event detected by the sensor 50a. A smart meter will be exemplified as the sensor 50a. In this case, examples of the items of the event information are the identification information (sensor ID) of the smart meter, the position information (latitude and longitude) of the site of installation, the measured value of power consumption, and the time stamp of the measurement site.

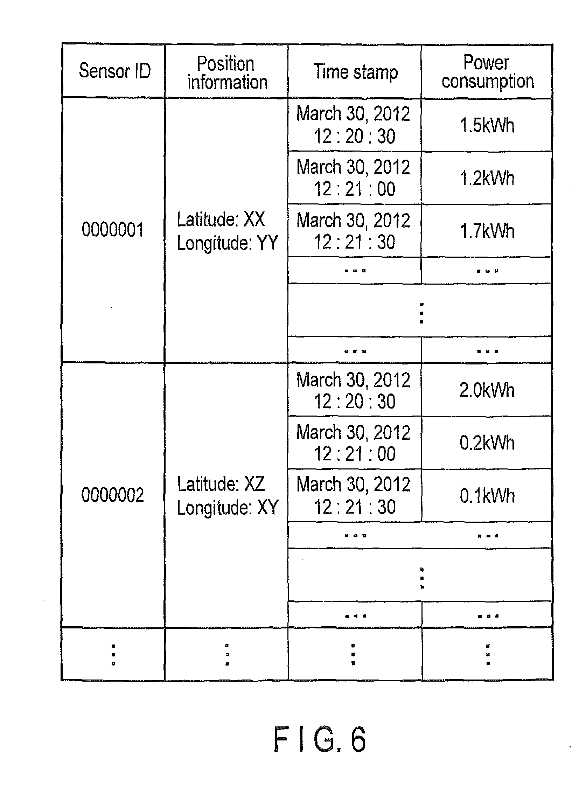

FIG. 6 is a view showing an example of the event information 20a stored in the database 20 of the country cloud 100. As shown in FIG. 6, the event information 20a is stored one-dimensionally as the event information, so to speak, raw data detected by the sensor 50a. Hence, the database 20 requires a storage device having an especially large capacity. Instead of using a single storage device, a plurality of storage devices distributed on the cloud are preferably used to constitute the database 20. The mass storage device of this type is sometimes called BigData.

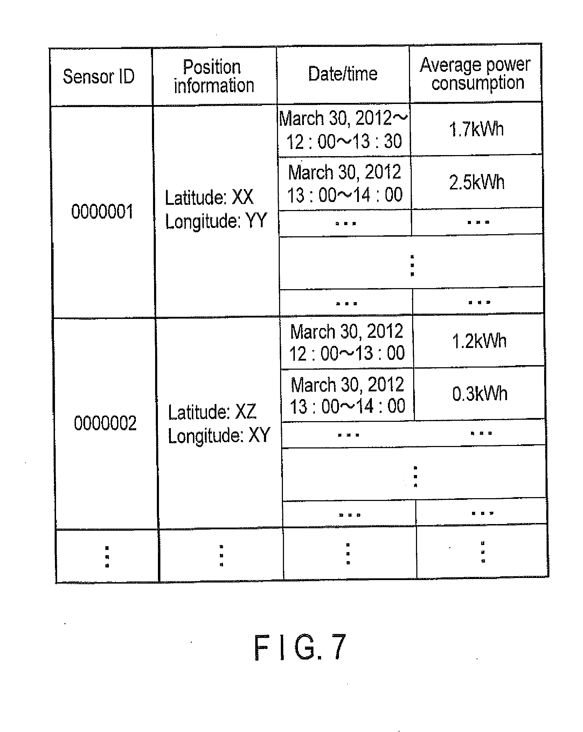

FIG. 7 is a view showing an example of optimized event information. The pieces of event information shown in FIG. 7 are obtained by integrating the pieces of event information 20a shown in FIG. 6 in terms of time, and stored in, for example, a database 70 of the prefecture cloud 200. Referring to FIG. 7, the time stamps at the 30 sec interval in FIG. 6 are grouped together in every hour so as to indicate the average power consumption in every hour. The pieces of event information 20a are thus integrated in accordance with, for example, the layer level. Since the prefecture MS 60 of the intermediate layer need only hold minimum necessary data, the processing speed can be improved.

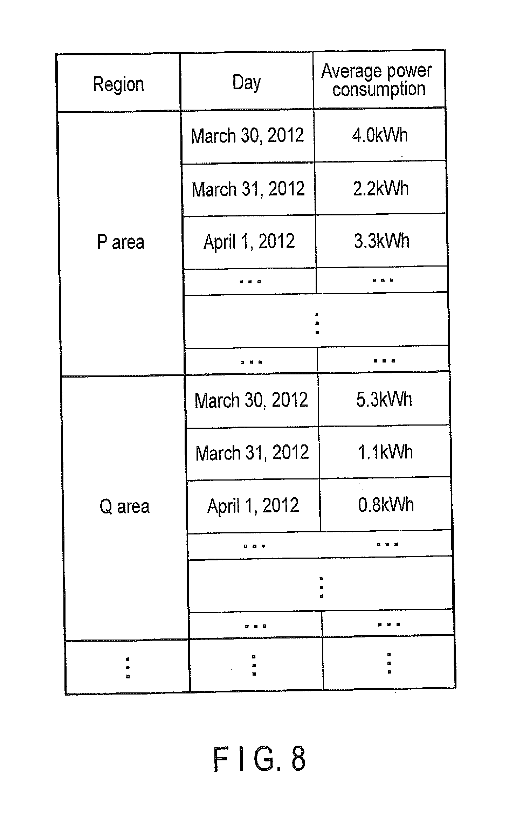

FIG. 8 is a view showing another example of integrated event information. The pieces of event information shown in FIG. 8 are obtained by further integrating the pieces of event information shown in FIG. 7. FIG. 8 shows the average power consumption in every day on, for example, the area basis.

That is, the integration criterion is time in the table shown in FIG. 7 but time and location in the table shown in FIG. 8. The amount of data shown in FIG. 8 is smaller than that of the data shown in FIG. 7. Hence, the city MS 30 of the lower layer need only hold minimum necessary data. It is therefore possible to improve the processing speed and save the capacity of the storage device.

Note that the event information integration criterion in each layer is not limited to the above-described criterion according to the layer level. For example, the event information may be integrated for each sensor type or summarized based on various criteria.

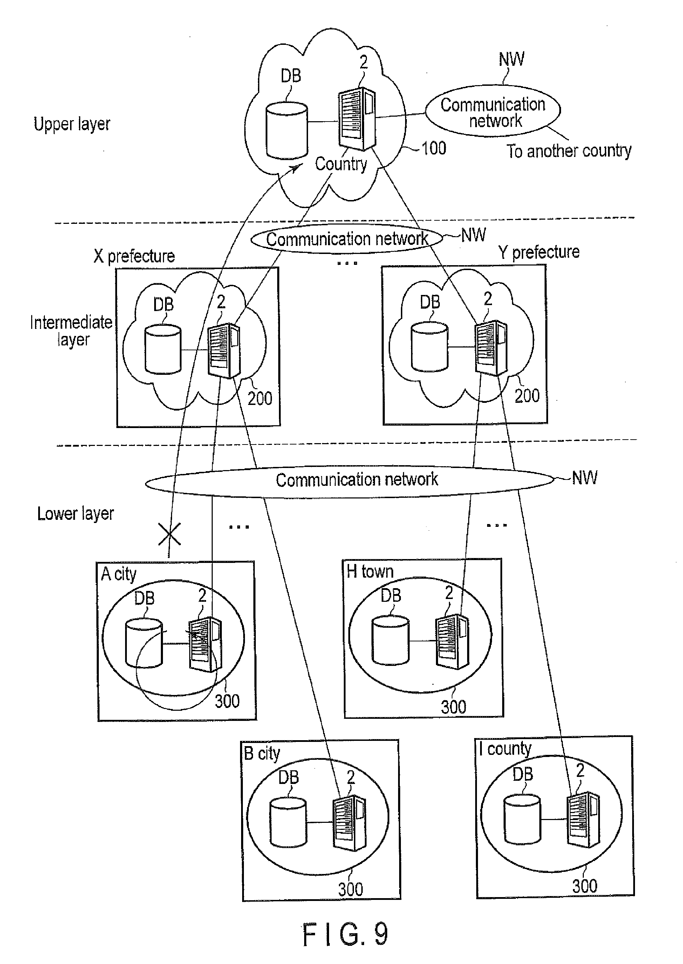

FIG. 9 is a view schematically showing autonomous control in clouds. As described above with reference to FIG. 3, if a trouble has occurred in the communication with the upper layer or the intermediate layer due to a failure or the like, the control unit 30c of the city MS 30 autonomously controls the social infrastructures 51 to 5n based on event information collected by itself. This allows to prevent a breakdown in the operation of the social system during at least a predetermined period. That is, since each cloud holds minimum necessary data, each MS can continue the control in the closed system of the cloud of its own.

If the autonomous operation function is imparted to the actuator 50b itself in preparation for such a case, the system can be expected to be more stably operated.

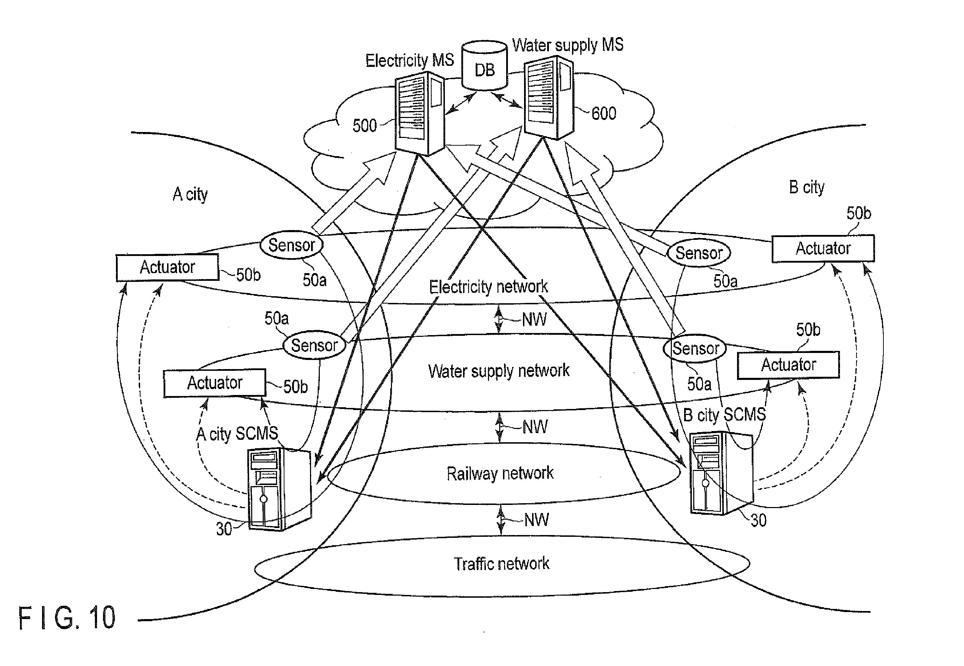

FIG. 10 is a view schematically showing the flow of information and data according to the first embodiment. Each of an A city and a B city includes the SCMS (Smart Community MS) 30 (city MS 30). The electricity network, the water supply network, the railway network, and the traffic network are constructed over the A city and the B city and associated with each other by the telecommunication line of the communication network NW. To avoid the cumbersomeness, the electricity network and the water supply network will be explained below.

Both the electricity network and the water supply network include the sensors 50a and the actuators 50b. All pieces of event information detected by the sensors 50a of the electricity network are uploaded to an electricity MS 500 in the cloud of level higher than the city/town/village level. The electricity MS 500 processes the event information to generate data necessary for controlling the social infrastructure. This data is transmitted to the city MS 30 of the A city and the city MS 30 of the B city.

The city MS 30 of the A city controls the actuator 50b of the electricity network based on the acquired data and event information collected by itself. The city MS 30 of the B city also controls the actuator 50b of the electricity network based on the data acquired from the upper layer and event information collected by itself.

This also applies to the water supply network. More specifically, all pieces of event information detected by the sensors 50a of the water supply network are uploaded to a water supply MS 600. The water supply MS 600 processes the collected event information to generate data necessary for controlling the social infrastructure. This data is transmitted to the city MS 30 of the A city and the city MS 30 of the B city.

The city MS 30 of the A city controls the actuator 50b of the water supply network based on the acquired data and event information collected by itself. The city MS 30 of the B city also controls the actuator 50b of the water supply network based on the data acquired from the upper layer and event information collected by itself.

As described above, in the first embodiment, the sensor 50a detects the event. The event information outputted from the sensor 50a is uploaded to the country MS 10 and intensively stored. The event information 20a optimized based on the layer levels of the intermediate layer and the lower layer is generated from the data integrated in the country MS 10. The generated event information 20a is transmitted from the upper layer to the lower layer. The criterion of the optimization or integration of the event information 20a reflects the layer level of the social system or the individual request (individual need) of the social system.

That is, in the first embodiment, the event information outputted by the event-detected sensor is gathered to the upper layer control system from the lower layer control system. The lower control system acquires the control data from the upper layer and controls the social infrastructure based on the control data. Based on the event information collected by itself, the lower layer control system can control the social infrastructure uniquely without being dependent on the upper layer control system. Therefore, the optimality from both sides of the whole and a local can be collateralized. Especially, when a plurality of lower layer control systems corresponding to two or more cities or communities exist in specific administrative boundaries, for example, a country and a prefecture, it becomes possible to optimize whole of the specific administrative boundaries, and each city or a community.

The first embodiment can be suitable for the application to real-time pricing of power rates etc., for example. That is, since the parameter concerning employment of a social infrastructure is controllable, carrying out the monitor of the present situation, it becomes possible to realize fine control.

The event information outputted from the event-detected sensor 50a is uploaded to the country MS 10 and the prefecture MS 60. The event information is stored in MS 10 and MS 60. The prefecture MS 60 received the event information generates the optimized event information 20a as the country MS 10 does. The generated event information 20a is transmitted from the intermediate layer to the lower layer. The criterion of the optimization or integration of the event information 20a reflects the layer level of the social system or the individual request (individual need) of the social system.

### [Second Embodiment]

In the second embodiment, a control target is a community having social infrastructures. A community has a variety of social infrastructures that support people's livelihood, including an energy infrastructure, a water supply infrastructure, and a medical infrastructure. The community can be regarded as a set of social infrastructures. The community itself can be regarded as one of a social infrastructure. A community that implements comfort, safety, and energy saving by synthetically controlling infrastructures is particularly called a smart community.

In recent years, communities managed by a developer, a proprietary company, or a general power receiving contractor are growing in number. In a community of this type, generally, power received from an electric power company at once is distributed to a plurality of customers in the community. Examples of the community of this type are a shopping mall, an apartment house, an industrial park, a residential street, and so on. This kind of community can be regarded as a social infrastructure.

In the second embodiment, the presence of a company such as a developer that manages and operates a community is taken into consideration. For example, a company that receives power from an electric power company at once and distributes it in a community can be understood as an example of the company. A vendor can provide software at cost to the company that operates the community.

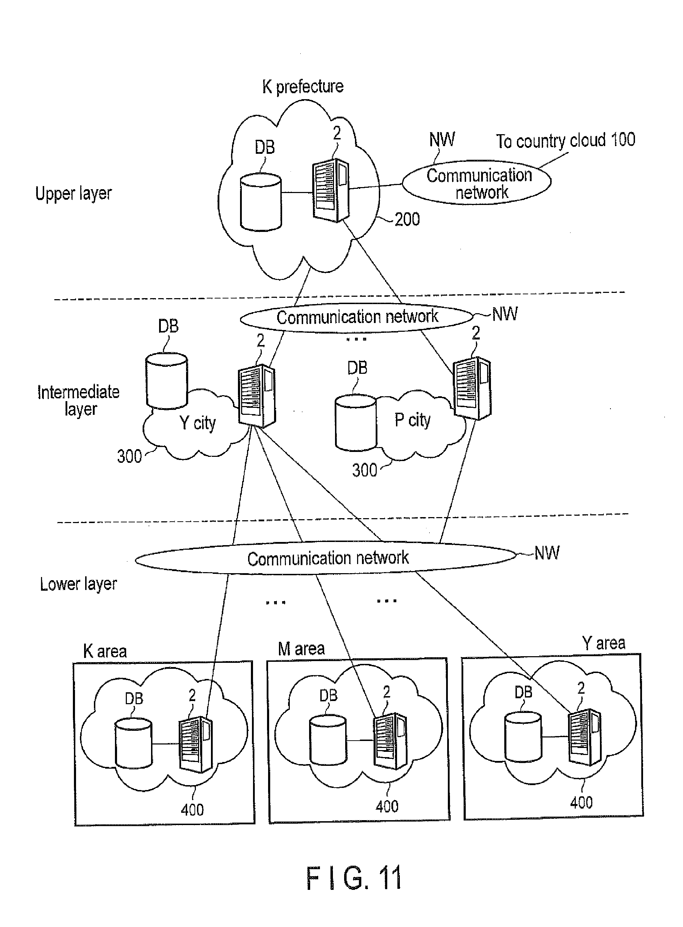

FIG. 11 is a conceptual view showing an example of a social infrastructure control system according to the second embodiment. FIG. 11 corresponds to what subdivided further the hierarchy of the cities/towns/villages level shown in FIG. 2. Referring to FIG. 11, a K prefecture is located in the upper layer. A prefecture cloud 200 of the K prefecture is connected to a country cloud 100 and city clouds 300 of a Y city and a P city via a telecommunication line of a communication network NW.

The city cloud 300 of the Y city is connected to a plurality of area clouds 400 via the telecommunication line of the communication network NW. FIG. 11 shows the clouds of a K area, an M area, and a Y area. The K area, the M area, and the Y area are controlled by the Y city.

Each of the K area, the M area, and the Y area can be regarded as a municipality or a municipality group belonging to the Y city. That is, the K area, the M area, and the Y area are, for example, districts, manufacturing quarters, office blocks which are wide to some extent (for example, 3 km square) and in which people live. The K area, the M area, and the Y area form communities.

Each of the area cloud 400 of the K area, the area cloud 400 of the M area, and the area cloud 400 of the Y area comprises a computer 2 and a database DB. The area clouds 400 are connected via the telecommunication line of the communication network NW and cooperate with each other.

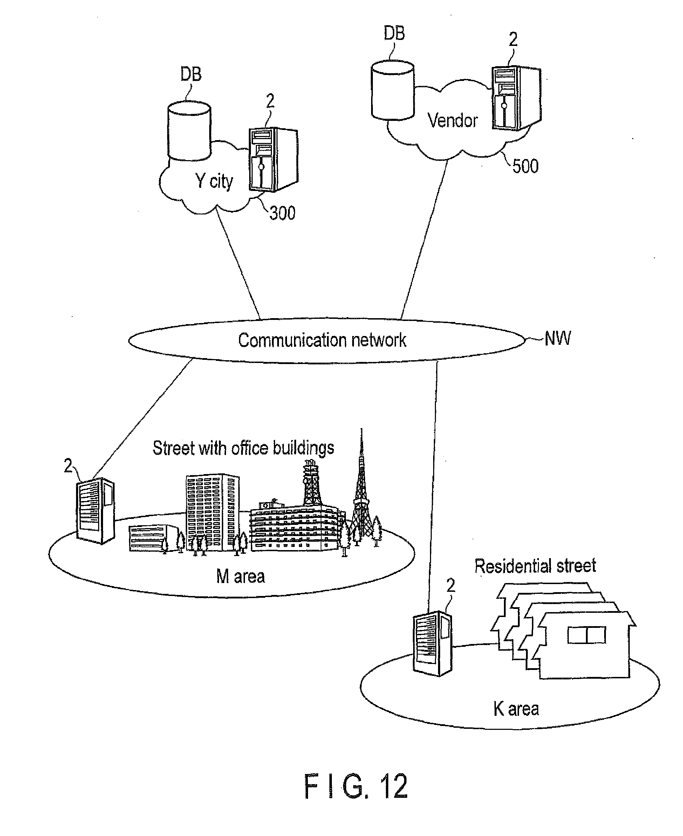

FIG. 12 is a view schematically showing the main part of the system shown in FIG. 11. The city cloud 300 of the Y city is connected to the M area and the K area (and the Y area) via the telecommunication line of the communication network NW. Each area comprises the computer 2 that is used by a company that takes charge in the area.

The M area is, for example, a community having a street with extremely tall office buildings. The K area is, for example, a community having a residential street. Hence, data specialized to an M area needs to be given to a computer 2 that controls the M area, and data specialized to a K area needs to be given to the computer 2 that controls the K area.

A vendor cloud 500 is connected to the telecommunication line of the communication network NW. The data given to computers 2 of each area are provided by the control system managed by the vendor of highest layer.

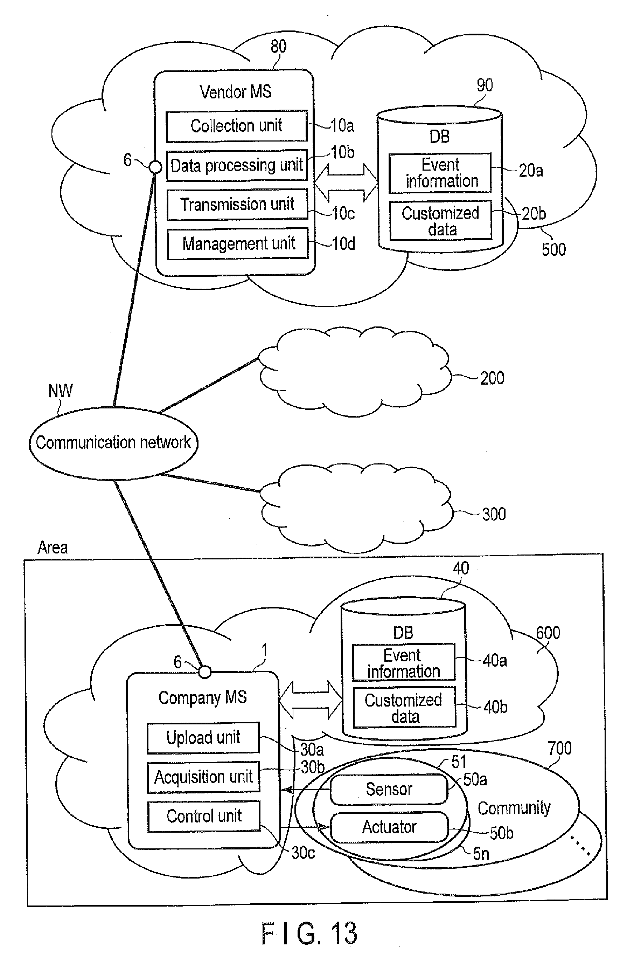

FIG. 13 is a view showing a social infrastructure control system according to the second embodiment. The system shown in FIG. 13 comprises the vendor cloud 500 positioned in the highest layer. The vendor cloud 500 can be connected to the telecommunication line of the communication network NW. The vendor cloud 500 is a cloud computing system managed and operated by a vendor, and comprises a vendor MS 80 and a database 90. The vendor cloud 500 is, for example, a computer or computer group having a server function. The computer comprises a memory that stores a program for implementing the functions according to the embodiment, and a control unit that executes the program.

The vendor MS 80 can be implemented as a computer itself, one of processing functions by a computer, or a data center. The database 90 can be stored in a storage device included in the vendor MS 80 or in another computer connected to the vendor MS 80.

On the other hand, in FIG. 13, for example, a community 700 corresponding to the K area, the M area, or the Y area (FIG. 11) is managed by a community cloud 600. The community cloud 600 comprises a company MS 1. The company MS 1 is, for example, the computer 2 (FIG. 11) and is connected to a database 40 provided in the community cloud 600.

The community 700 comprises a plurality of social infrastructures 51 to 5n. The social infrastructures 51 to 5n are, for example, a water infrastructure, a heat infrastructure, an electricity infrastructure, a traffic infrastructure, a building infrastructure, and the like. Each of the social infrastructures 51 to 5n comprises a sensor 50a and an actuator 50b.

The vendor MS 80 of the vendor cloud 500 comprises, as the functional blocks according to the embodiment, a collection unit 10a, a data processing unit 10b, a transmission unit 10c, and a management unit 10d. The database 90 can store event information 20a and customized data 20b.

The collection unit 10a collects the event information 20a detected and outputted from the sensor 50a from the company MS 1 via the telecommunication line of the communication network NW and stores it in the database 90.

The data processing unit 10b generates data necessary for a company MS 1 to control social infrastructures 51 to 5n by processing event information 20a stored in a database 90. In particular, the data processing unit 10b processes the event information in accordance with the individual needs in a community 700, thereby generating customized data 20b optimized on the community basis. Optimization includes, for example, extraction of data necessary for each community and added value generation such as average calculation. The generated customized data 20b is stored in the database 90.

For example, if the target community is the M area (FIG. 12), for example, data suitable for BEMS-oriented demand response is created. If the target community is the K area, for example, data suitable for HEMS-oriented demand response control or door-to-door PV system control is created. In this way, data suitable for the characteristics of the community is created from the event information 20a.

The transmission unit 10c transmits the data generated by the data processing unit 10b to the company MS 1. The management unit 10d manages the social infrastructures 51 to 5n and the community based on event information updated from the company MS 1 for the social infrastructures 51 to 5n and the community.

On the other hand, the company MS 1 comprises an upload unit 30a, an acquisition unit 30c, and a control unit 30c. The upload unit 30a uploads event information detected by the sensor 50a to a vendor MS 80, a country MS 10 and a prefecture MS 60 via a telecommunication line of a communication network NW.

Furthermore, the prefecture cloud 200 and the city cloud 300 and so on can be connected to the telecommunication line of the communication network NW. For the sake of brevity, it does not illustrate, but the prefecture cloud 200 shown in FIG. 13 has the similar configuration as to the prefecture cloud 200, and comprises a prefecture MS 60 and a database 70. Similarly to FIG. 3, the prefecture MS 60 has the similar configuration to the country MS 10. The city cloud 300 shown in FIG. 13 has the similar configuration as to the city cloud 300, and comprises a city MS 30 and a database 40.

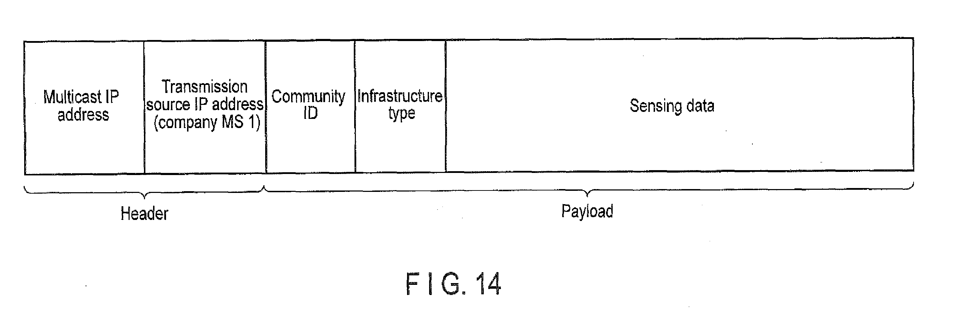

FIG. 14 is a view showing an example of event information transmitted from the company MS 1 to the vendor MS 80, the country MS 10 and the prefecture MS 60 via the telecommunication line of the communication network NW. The event information can be sent to the telecommunication line of the communication network NW in the form of, for example, an IP packet. Sensing data detected by the sensor 50a, the type of the social infrastructure concerning the sensing data, and information (Identification: ID) used to identify the community 700 including the social infrastructure are, for example, described in the payload of the IP packet.

The IP address of the transmission source (company MS 1) and the multicast address are, for example, described in the header of the IP packet. The vendor MS 80, the country MS 10, the prefecture MS 60, and the city MS 30 can collect event information by receiving the IP packet. The form in which the sensing data and the infrastructure type are described in the payload of the IP packet can also be applied to the first embodiment.

Referring back to FIG. 13, an acquisition unit 30b acquires data (customized data 40b) necessary for controlling the social infrastructures 51 to 5n from a vendor MS 80.

The control unit 30c gives the actuator 50b a control instruction based on the acquired control data by the acquisition unit 30b. Or, the control unit 30c gives the actuator 50b the control instruction based on the event information detected by the sensor 50a. That is, the control unit 30c controls the social infrastructures 51 to 5n based on the control data acquired form the upper layer, or the event information acquired at local.

The control unit 30c gives higher priority to the control based on the control data acquired from the higher layer than the control based on the event information acquired locally. Thus, system-wide optimality is preferentially securable by giving high priority to the control from the upper system.

In case of a failure in communication with the vendor MS 80 caused by, for example, a failure in the telecommunication line of the communication network NW, the control unit 30c autonomously controls the social infrastructures 51 to 5n based on event information 40a collected by itself.

The database 40 stores the event information 40a and customized data 40b. The event information 40a is information outputted from the sensor 50a based on the event detected by the sensor 50a. Necessary information is appropriately selected from pieces of information uploaded to the vendor MS 80.

The customized data 40b is data obtained by processing the event information based on a predefined criterion, for example, data specialized to the control needs of the community including the social infrastructures 51 to 5n. The customized data 40b is acquired from the vendor MS 80.

As described above, the company MS 1 controls the sensor 50a and the actuator 50b of each of the social infrastructures 51 to 5n in the community 700 based on the customized data acquired from the vendor MS 80, thereby supporting comfortable and safe life of citizens in the community 700.

As described above, according to the second embodiment, the vendor MS 80 which is managed by the vendor of the upper layer generates customized data optimized for the community 700 based on the event information received from each control system in the lower layer. The control unit 30c of the company MS 1 which received the data controls the community 700 based on the data acquired from the vendor MS 80. This allows the vendor to construct a business model for, for example, charging the company of the community corresponding to the control system of the lower layer for the given customized data.

Based on the event information collected by itself, the lower layer control system can control the social infrastructure uniquely without being dependent on the upper layer control system. Therefore, the optimality from both sides of the whole and a local can be collateralized.

### [Third Embodiment]

In the third embodiment, a procedure of causing a vendor to create customized data optimized for each community will be described.

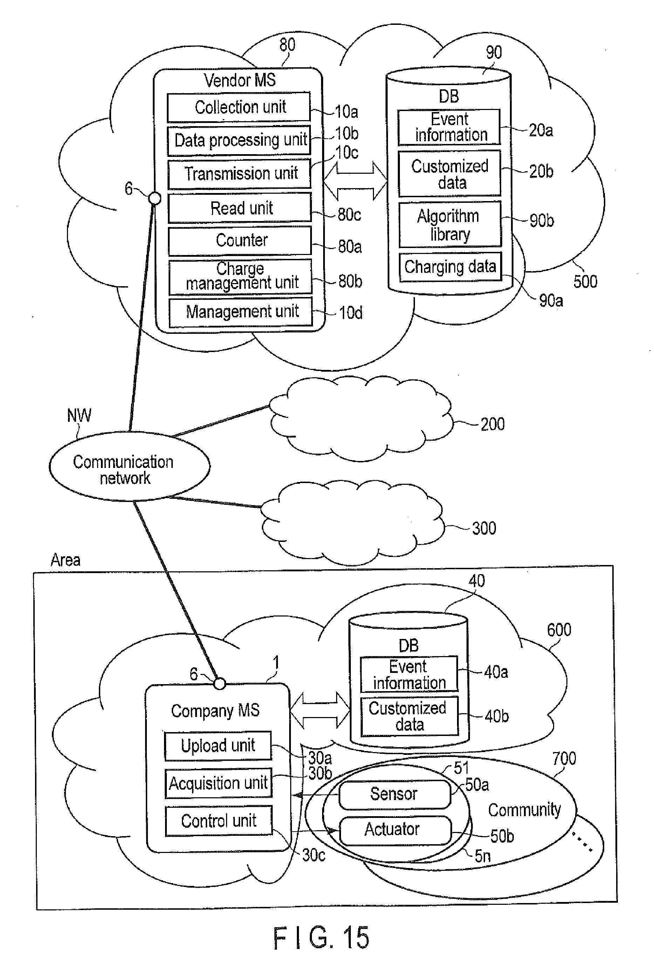

FIG. 15 is a view showing a social infrastructure control system according to the third embodiment. The system shown in FIG. 15 comprises the vendor cloud 500. The vendor cloud 500 can be connected to the telecommunication line of the communication network NW. The vendor cloud 500 is a cloud computing system managed and operated by a vendor, and comprises a vendor MS 80 and a database 90. The vendor cloud 500 is, for example, a computer or computer group having a server function. The computer comprises a memory that stores a program for implementing the functions according to the embodiment, and a control unit that executes the program.

The vendor MS 80 can be implemented as a computer itself, one of processing functions by a computer, or a data center. The database 90 can be stored in a storage device included in the vendor MS 80 or in another computer connected to the vendor MS 80.

On the other hand, in FIG. 15, for example, a community 700 corresponding to the K area, the M area, or the Y area (FIG. 11) is managed by a community cloud 600. The community cloud 600 comprises a company MS 1. The company MS 1 is, for example, the computer 2 (FIG. 11) and is connected to a database 40 provided in the community cloud 600.

The community 700 comprises a plurality of social infrastructures 51 to 5n. The social infrastructures 51 to 5n are, for example, a water infrastructure, a heat infrastructure, an electricity infrastructure, a traffic infrastructure, a building infrastructure, and the like. Each of the social infrastructures 51 to 5n comprises a sensor 50a and an actuator 50b.

The vendor MS 80 of the vendor cloud 500 comprises, as the functional blocks according to the embodiment, a collection unit 10a, a data processing unit 10b, a transmission unit 10c, a read unit 80c, a counter 80a, a charge management unit 80b, and a management unit 10d. The database 90 can store event information 20a, customized data 20b, an algorithm library 90b, and charging data 90a.

The collection unit 10a collects the event information 20a detected and outputted from the sensor 50a from the company MS 1 via the telecommunication line of the communication network NW and stores it in the database 90.

The data processing unit 10b generates data necessary for the company MS 1 to control the social infrastructures 51 to 5n by processing the event information 20a stored in the database 90. In particular, the data processing unit 10b processes the event information in accordance with the individual needs of the community 700, thereby generating customized data 20b optimized on the community basis. Optimization includes, for example, extraction of data necessary for each community and added value generation such as average calculation. The generated customized data 20b is stored in the database 90.

For example, if the target community is the M area (FIG. 12), for example, data suitable for BEMS-oriented demand response is created. If the target community is the K area, for example, data suitable for HEMS-oriented demand response control or door-to-door PV system control is created. In this way, data suitable for the characteristics of the community is created from the event information 20a.

The transmission unit 10c transmits the data generated by the data processing unit 10b to the company MS 1.

The read unit 80c reads, from an algorithm library 90b, an algorithm necessary for a data processing unit 10b to generate control data. That is, the read unit 80c reads, from the algorithm library 90b, an algorithm necessary for generating control data for each community (local system) that is the target of the data processing unit 10b.

Especially, the read unit 80c reads the optimization algorithm of the target local system from the algorithm library 90b in accordance with the individual need of the local system. When a plurality of local systems are hierarchically formed into a plurality of layers (for example, FIG. 2), the read unit 80c reads the optimization algorithm of the target local system based on the layer of the local system. The red algorithm is transferred to the data processing unit 10b and used every time control data is generated.

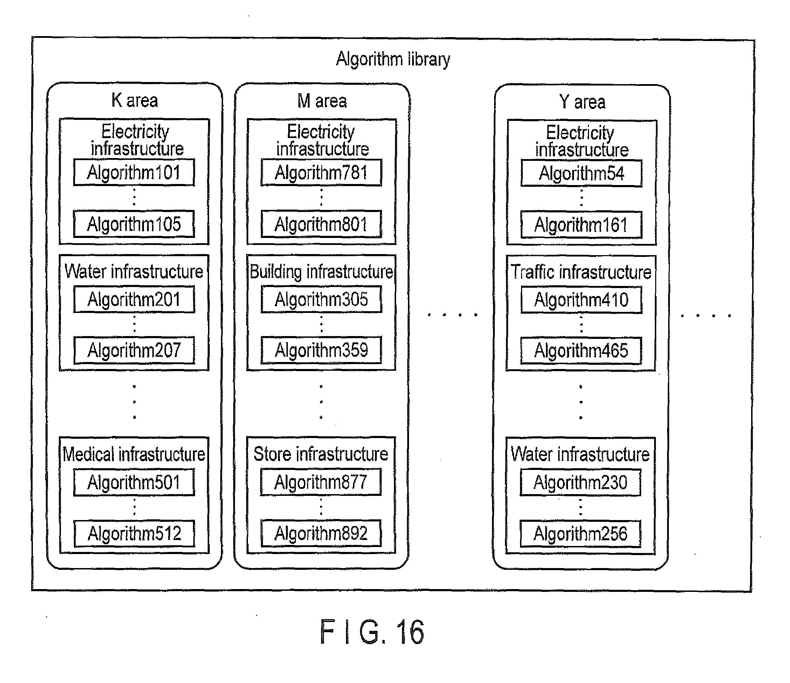

FIG. 16 is a view showing an example of the algorithm library 90b shown in FIG. 15. The algorithm library 90b is a library for recording the optimization algorithm of each local system (social infrastructure or community).

That is, the algorithm library 90b is a library that records an arithmetic algorithm used to generate control data (customized data) from sensor information in correspondence with each social infrastructure or community. The actual form of each algorithm can be a code sequence that describes, for example, an optimization function in a specific language, binary data decoded up to a machine language level, or data obtained by encrypting it.

The algorithms are given, for example, serial numbers for the sake of discrimination. The algorithms are put into units on the basis of, for example, a social infrastructure provided in each area and managed. In addition, ranks S, A, B,... are set for the units in accordance with, for example, the service contents, and the algorithms of each rank can be managed together. The hierarchical structure is convenient in managing the variety of algorithms.

Each algorithm is updated or upgraded by its vendor (provider). The algorithm library 90b is thus extended sequentially. The developer of each algorithm can construct a business model for suitably charging a service beneficiary every time control data based on the algorithm provided by itself is downloaded.

Information representing what kind of arithmetic function is provided by an algorithm, the serial number to individually specify each algorithm, and the updating history can be managed in the form of a list or XML data. The vendor MS 30 can specify the algorithm to be selected from the notified contents.

Referring back to FIG. 15, the data processing unit 10b optimizes event information 20a based on the algorithm red from the algorithm library 90b by the read unit 80c, thereby generating control data for each local system.

The counter 80a counts the amount of control data needed to control the community downloaded to the company MS 1. Any "amount" such as the number of downloaded data, the data size, or the number of bytes can be used as long as it can quantitatively be counted and used as the basis of charging.

The charge management unit 80b acquires the amount counted by the counter 80a and calculates charging data 90a based on the predetermined unit price. The charging data 90a can be managed in a table for, for example, each of the community. The charging data 90a is stored in the storage unit (not shown) of the vendor MS 80 or the database 90. The charging data 90a is information used when charging a beneficiary such as the operator (for example, municipality) of the city MS 30 or a resident and also serving as the source of income for the vendor.

The management unit 10d manages the social infrastructures 51 to 5n or the community based on event information uploaded from a company MS 1 for the social infrastructures 51 to 5n or the community.

On the other hand, the company MS 1 comprises an upload unit 30a, an acquisition unit 30c, and a control unit 30c. The upload unit 30a uploads event information detected by the sensor 50a to a vendor MS 80, a prefecture MS 60 and city MS 30 via a telecommunication line of a communication network NW. The prefecture cloud 200 and the city cloud 300 and so on can be connected to the telecommunication line of the communication network NW.

The acquisition unit 30b acquires data (customized data 40b) necessary for controlling the social infrastructures 51 to 5n from a vendor MS 80.

The control unit 30c gives the actuator 50b a control instruction based on the acquired control data by the acquisition unit 30b. Or, the control unit 30c gives the actuator 50b the control instruction based on the event information detected by the sensor 50a. That is, the control unit 30c controls the social infrastructures 51 to 5n based on the control data acquired form the upper layer, or the event information acquired at local.

The control unit 30c gives higher priority to the control based on the control data acquired from the higher layer than the control based on the event information acquired locally. Thus, system-wide optimality is preferentially securable by giving high priority to the control from the upper system.

In case of a failure in communication with the vendor MS 80 caused by, for example, a failure in the telecommunication line of the communication network NW, the control unit 30c autonomously controls the social infrastructures 51 to 5n based on event information 40a collected by itself.

The database 40 stores the event information 40a and customized data 40b. The event information 40a is information that is outputted from the sensor 50a based on the event detected by the sensor 50a. Necessary information is appropriately selected from pieces of information uploaded to the country MS 10.

The customized data 40b is data obtained by processing the event information based on a predefined criterion, for example, data specialized to the control needs of the social infrastructures 51 to 5n. The customized data 40b is acquired from the vendor MS 80.

Furthermore, the prefecture cloud 200 and the city cloud 300 and so on can be connected to the telecommunication line of the communication network NW. For the sake of brevity, it does not illustrate, but the prefecture cloud 200 shown in FIG. 15 has the similar configuration as to the prefecture cloud 200 shown in FIG. 3 or FIG. 13, and comprises a prefecture MS 60 and a database 70. Similar to FIG. 3 and FIG. 15, the prefecture MS 60 has the similar configuration to the country MS 10. The city cloud 300 shown in FIG. 15 has the similar configuration as to the city cloud 300 shown in FIG. 3 or FIG. 13, and comprises a city MS 30 and a database 40.

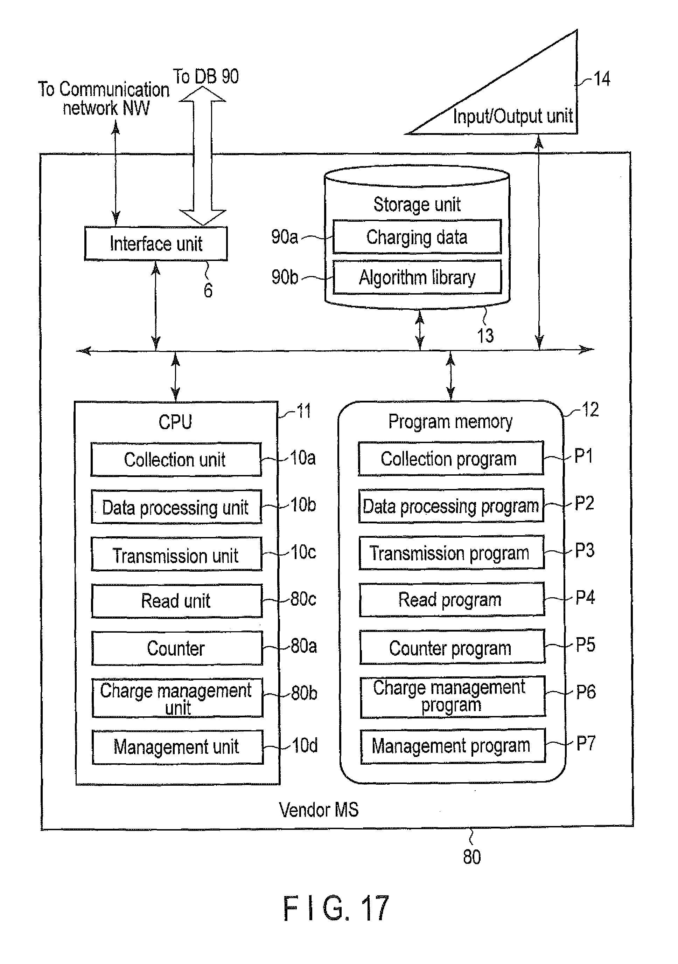

FIG. 17 is a functional block diagram showing an example of the vendor MS 80 shown in FIG. 15. The vendor MS 80 comprises an input/output unit 14, an interface unit 6, a storage unit 13, a CPU (Central Processing Unit) 11, and a program memory 12. That is, the vendor MS 80 is a computer that functions as the CPU 11 executes programs stored in the program memory 12.

The input/output unit 14 is a human-machine interface (an operation panel or a switch) operated by an operator or the like. The input/output unit 14 forms a GUI (Graphical User Interface) environment to receive information input by the user, and also provides information to the user.

The interface unit 6 is connected to the telecommunication line of the communication network NW and the database 90 and implements a communication function to the telecommunication line of the communication network NW and the clouds 500, 200, 300, and 600. A storage unit 13 stores the charging data 90a and an algorithm library 90b.

The program memory 12 stores a collection program P1, a data processing program P2, a transmission program P3, a read program P4, a counter program P5, a charge management program P6, and a management program P7 as the programs including instructions necessary for the processing function according to this embodiment. These programs can be either recorded in a removable medium (recording medium) such as a CD-ROM or downloaded via a communication line (including the telecommunication line of the communication network NW).

The CPU 11 reads out each program from the program memory 12 and performs arithmetic processing by hardware. The CPU 11 comprises, as the processing functions, the above-described collection unit 10a, data processing unit 10b, transmission unit 10c, read unit 80c, counter 80a, charge management unit 80b, and management unit 10d.

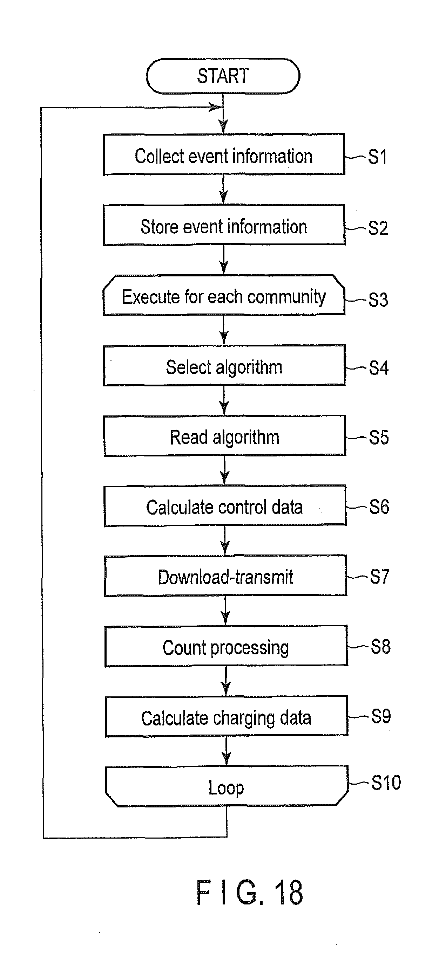

FIG. 18 is a flowchart showing an example of the processing procedure of the vendor MS 80 according to the third embodiment. Referring to FIG. 18, the vendor MS 80 collects, via the telecommunication line of the communication network NW, event information acquired by the company MS 1 (step S1) and stores the event information in a database 90 (step S2).

The vendor MS 80 executes a loop included in steps S3 to S10. In the loop, the vendor MS 80 selects an optimization algorithm corresponding to the target community from the algorithm library 90b (step S4). As for the criterion of selection, for example, an algorithm according to the individual need of the target community is selected, as described above. Alternatively, if communities (clouds) have a hierarchical structure, the criterion of selection is defined such that, for example, an algorithm is selected based on the layer of the target community (cloud). Next, the vendor MS 80 reads the algorithm selected in step S4 (step S5).

The vendor MS 80 calculates control data from the event information 20a using the red algorithm (step S6). The vendor MS 80 download-transmits the calculated control data to the company MS 1 via the telecommunication line of the communication network NW (step S7). The vendor MS 80 counts the amount of control data downloaded to the company MS 1 (step S8), and calculates charging data 90a based on the count value (step S9).

The loop of steps S3 to S10 is, for example, sequentially executed for, for example, all communities as the target of the vendor MS 80. Exiting from the loop, the processing procedure returns to step S1 again, and the vendor MS 80 repeats the processing from event information collection. Note that the loop of steps S3 to S10 may be executed in parallel to collection and storage of event information.

As described above, according to the third embodiment, the event information 20a stored in the database 90 is optimized in accordance with the need or layer level of the community 700, and control data corresponding to each community is generated. The company MS 1 acquires the generated control data and controls the social infrastructures 51 to 5n using the control data. This makes it possible to generate control data for each community using the resources of the cloud (vendor cloud 500). The operator of the community can earn a profit such as saving of resources used to control the social infrastructures 51 to 5n.

In addition, since the event information 20a generated in a lower layer cloud is unitarily managed in the upper layer cloud, the resistance against failures and the like can be improved. Furthermore, since the telecommunication line of the communication network NW capable of guaranteeing the real-time characteristic concerning data upload and download is used, the delay in controlling the social infrastructures 51 to 5n can be minimized.

Since the pieces of event information 20a are integrated using an appropriate algorithm for each community, each community acquires minimum necessary control data when controlling the social infrastructures 51 to 5n. That is, if minimum data necessary for following the time constant of the device at each end of the social infrastructures 51 to 5n can be acquired, each community can control the social infrastructures 51 to 5n without losing the real-time characteristic of control.

Charging data is calculated every time control data is generated and downloaded. The charging data is managed for each beneficiary of control data. This allows to give the vendor an incentive to update the algorithm and provide a social infrastructure control system useful for the software vendor as well as the citizens who live in the community.

Based on the event information collected by itself, the lower layer control system can control the social infrastructure uniquely without being dependent on the upper layer control system. Therefore, the optimality from both sides of the whole and a local can be collateralized.

According to the third embodiment, it is possible to flexibly cope with a change in the community as a social system. That is, event information collected every moment is analyzed, and the characteristic of the community is calculated. Repeating this processing allows to extend the algorithm library in accordance with the development or reduction of the community.

Note that the present invention is not limited to the above-described embodiments. For example, in the embodiments, event information uploaded from the lower layer is intensively stored in the upper layer. That is, the event information generated in the lowermost layer is directly uploaded to the uppermost layer, and the uppermost layer holds all data. Instead, the intermediate layer may hold all data. In short, it is necessary to only intensively store and manage all data in any one of the clouds.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes may be made without departing from the spirit of the inventions. The accompanying claims and their equivalents are intended to cover such forms or modifications as would fall within the scope and spirit of the inventions.

## Claims

1. A social infrastructure control system comprising:
an upper layer control system; and
a lower layer control system, wherein
the lower layer control system comprising:
a sensor configured to detect event concerning a social infrastructure, and to output event information;
an upload unit configured to upload, via a telecommunication line, the event information to the upper layer control system; and
a control unit configured to control the social infrastructure based on control data transmitted from the upper layer control system or the event information, wherein
the upper layer control system comprising:
a data processing unit configured to generate, based on the event information, the control data used to control the social infrastructure; and
a transmission unit configured to transmit, via the telecommunication line, the control data to the control unit.

2. The social infrastructure control system according to claim 1, further comprising:
an intermediate layer control system, wherein
the upload unit uploads the event information to the upper layer control system or the intermediate layer control system, and
the intermediate layer control system includes the data processing unit and the transmission unit.

3. The social infrastructure control system according to claim 1 or 2, further comprising:
a storage unit configured to store a plurality of optimization algorithm; and
a read unit configured to read the optimization algorithm of a target social infrastructure from the storage unit, wherein
the data processing unit optimizes the event information based on the red optimization algorithm and generates the control data for each social infrastructure.

4. The social infrastructure control system according to claim 3, wherein the read unit reads the optimization algorithm of the target social infrastructure in accordance with an individual need of the social infrastructure.

5. The social infrastructure control system according to claim 3, wherein the social infrastructure is controlled by one of the control system, and
the read unit reads the optimization algorithm of the target social infrastructure based on a layer of the social infrastructure.

6. The social infrastructure control system according to claim 1 or 2, further comprising a charge management unit configured to manage charging data based on a unit price preset for the transmitted control data.

7. The social infrastructure control system according to claim 1 or 2, wherein if a failure has occurred in reception of the transmitted control data, the control unit autonomously controls the social infrastructure based on the detected event information.

8. The social infrastructure control system according to claim 1 or 2, wherein the upper layer control system comprises a cloud computing system including a database configured to store the event information.

9. The social infrastructure control system according to claim 1 or 2, wherein
the sensor detects the event information for each of a plurality of social infrastructures of different types,
the upload unit uploads the event information detected for each of the plurality of social infrastructures, and
the system further comprises a management unit configured to manage the plurality of social infrastructures based on the uploaded event information for each of the plurality of social infrastructures.

10. A server of upper layer control system configured to be capable of communicating with a lower layer control system including a control apparatus configured to control a social infrastructure based on control data or event information of the social infrastructure, the server of upper layer control system comprising:
a collection unit configured to collect event information concerning event of the social infrastructure from the lower layer control system;
a database configured to store the collected event information;
a data processing unit configured to generate, based on the event information stored in the database, control data used to control the social infrastructure; and
a transmission unit configured to transmit the control data to the control apparatus.

11. The server of upper layer control system according to claim 10, further comprising:
a storage unit configured to store an optimization algorithm for each of a plurality of local systems; and
a read unit configured to read the optimization algorithm of a target local system from the storage unit, wherein
the data processing unit optimizes the event information stored in the database based on the red optimization algorithm and generates the control data for each local system.

12. The server of upper layer control system according to claim 11, wherein the read unit reads the optimization algorithm of the target local system in accordance with an individual need of the local system.

13. The server of upper layer control system according to claim 11, wherein when the plurality of local systems are hierarchically formed into a plurality of layers, the read unit reads the optimization algorithm of the target local system based on a layer of the local system.

14. The server of upper layer control system according to claim 10, further comprising a charge management unit configured to manage charging data based on a unit price preset for the transmitted control data.

15. A server of lower layer control system configured to be capable of communicating with an upper layer control system that generates control data for controlling a social infrastructure, the server of lower layer control system comprising:
a collection unit configured to collect event information concerning event of the social infrastructure;
a transmission unit configured to transmit the collected event information to the upper layer control system;
a reception unit configured to receive the control data transmitted from the upper layer control system; and
a control unit configured to control the social infrastructure based on the received control data or the event information.

16. The server of lower layer control system according to claim 15, wherein if a failure has occurred in reception of the control data, the server of lower layer control system autonomously controls the social infrastructure based on the collected event information.

17. A control method which is applicable for a social infrastructure control system including an upper layer control system and a lower layer control system, the method comprising:
outputting, by the lower control system, event information with detecting event concerning a social infrastructure;
uploading, by the lower layer control system, event information to the upper layer control system via a telecommunication line;
generating, by the upper layer control system, control data used to control the social infrastructure based on the event information;
transmitting, by the upper layer control system, the control data to the lower layer control system via the telecommunication line; and
controlling, by the lower layer control system, the social infrastructure based on the control data or event information.

18. The control method according to claim 17, wherein the generating comprising:
reading, from a storage unit configured to store a plurality of optimization algorithm, the optimization algorithm of a target social infrastructure; and
optimizing the event information based on the red optimization algorithm to generate the control data for each social infrastructure.

19. The control method according to claim 17, further comprising managing, by the upper layer control system, charging data based on a unit price preset for the transmitted control data.

20. A control method which is applicable for an upper layer control system implemented in a social infrastructure control system that includes the upper layer control system and a lower layer control system that include a control apparatus configured to control a social infrastructure based on control data or event information of the social infrastructure, the method comprising:
generating, based on the event information concerning event of the social infrastructure, control data used to control the social infrastructure; and
transmitting, via a telecommunication line, the control data to the lower layer control system.

21. The control method according to claim 20, wherein the generating comprising:
reading, from a storage unit configured to store a plurality of optimization algorithm, the optimization algorithm of a target social infrastructure; and
optimizing the event information based on the red optimization algorithm to generate the control data for each social infrastructure.

22. The control method according to claim 20, further comprising managing charging data based on a unit price preset for the transmitted control data.

23. A control method which is applicable for a lower layer control system implemented in a social infrastructure control system including an upper layer control system and the lower layer control system, the method comprising:
outputting event information with detecting event concerning a social infrastructure;
uploading the event information to the upper layer control system via a communication network; and
controlling the social infrastructure based on the control data transmitted and generated by the upper layer control system based on the uploaded event information or the event information.

24. A program comprising statements for causing a computer to perform the method according to one of claims 17 to 23.
